# EUROPÄISCHE PATENTSCHRIFT

(11) **EP 2 537 404 B1**
(45) Veröffentlichungstag und Bekanntmachung des Hinweises auf die Patenterteilung: **21.06.2017**
(21) Anmeldenummer: 12002387.4
(22) Anmeldetag: 02.04.2012
(51) Int. Cl.: A01D 75/28, A01F 12/28

(54) **Mähdrescher mit einer Axialabscheidevorrichtung und Verfahren zum Betreiben eines Mähdreschers**
Combine harvester with an axial separation device and method for operating a combine harvester
Moissonneuse-batteuse avec dispositif de séparation axiale et procédé de fonctionnement d'une moissonneuse-batteuse

(30) Priorität: 20.06.2011 DE 102011061215
(43) Veröffentlichungstag der Anmeldung: 26.12.2012
(73) Patentinhaber: CLAAS Selbstfahrende Erntemaschinen GmbH, 33428 Harsewinkel (DE)
(72) Erfinder: Baumgarten, Joachim, Dr., 48361 Beelen (DE); Diekamp, Andreas, 48499 Salzbergen (DE); Holtmann, Bernd, 48324 Sendenhorst (DE); Bellmann, Rainer, 33428 Harsenwinkel (DE); Heitmann, Christoph, 48231 Warendorf (DE); Schröder, Axel, 33330 Gütersloh (DE)

(56) Entgegenhaltungen:
- EP-A1- 1 284 098
- EP-A1- 1 449 425
- EP-A1- 2 135 502
- EP-A1- 2 425 703
- WO-A1-94/15450
- US-A- 4 177 820
- US-A1- 2007 123 326

## Beschreibung

Die vorliegende Erfindung betrifft einen Mähdrescher mit einer Axialabscheidevorrichtung gemäß dem Oberbegriff des Anspruches 1 sowie ein Verfahren zum Betreiben eines Mähdreschers gemäß dem Oberbegriff des Anspruches 4. Mähdrescher mit einer Axialabscheidevorrichtung zum Trennen eines von dem Mähdrescher aufgenommenen Erntegutstromes in mehrere Teilströme, von denen ein aus Korn und Nichtkornbestandteilen bestehender Teilstrom durch eine Abscheidefläche der Axialabscheidevorrichtung einer dieser nachgeordneten Reinigungsvorrichtung zuführbar ist, sind hinlänglich bekannt. Bei Erntevorgängen in der Ebene stellt sich eine im Wesentlichen gleichmäßige Abgabe des Teilstromes von der Axialabscheidevorrichtung ein, so dass nachgeordnete Vorrichtungen, wie die Reinigungsvorrichtung, ebenfalls gleichmäßig mit Erntegut belastet sind. Hingegen führt das Ernten am Seitenhang schwerkraftbedingt dazu, dass sich abgeerntetes Erntegut bereits bei der Übergabe vom Schneidwerk in den Schrägförderer talseitig anreichert, während hangseitig eine Abnahme der Konzentration an Erntegut zu verzeichnen ist, es somit ein örtliches Konzentrationsgefälle auftritt. Dieses örtliche Konzentrationsgefälle setzt sich während des Verarbeitungsprozesses innerhalb des Mähdreschers fort und verstärkt sich zunehmend.
Die WO94/15450 beschreibt eine Vorrichtung zur Vergleichmäßigung von Erntegut, welches von einem Axialtrennrotor abgegeben und auf ein Sieb einer Reinigungsvorrichtung gelangt. Die Vorrichtung ist als eine quer zur Erntegutförderrichtung angetriebene Nivellierungsvorrichtung ausgeführt, die aus einer Vielzahl von an einer endlos umlaufenden Kette befestigten Fingern besteht, die in Abhängigkeit von einer detektierten Neigung des Mähdreschers schneller oder langsamer umläuft, um das auf das Sieb gelangende Erntegut zu vergleichmäßigen.

Die Druckschrift US 4 177 820 A offenbart einen Mähdrescher mit einer Axialtrennvorrichtung. Seitlich der Axialtrennvorrichtung ist eine Ablenkplatte vorgesehen. Um eine ungleichmäßige Gutstromverteilung des aus der Axialtrennvorrichtung austretenden Gutstroms, insbesondere in hügeligem Gelände, zu vermeiden, ist die Ablenkplatte in eine Schwenkstellung einstellbar.

Aus der EP 1 284 098 A1 ist ein Mähdrescher der eingangs genannten Art bekannt, welcher einen Axialtrennrotor zum Trennen eines Erntegutstromes in mehrere Teilströme, die Nutzmaterial und Abfallmaterial in unterschiedlichen Konzentrationen enthalten, aufweist. Dem Axialtrennrotor ist eine Reinigungsvorrichtung nachgeordnet, welcher ein aus Korn und Nichtkornbestandteilen bestehender Teilstrom zuführbar ist, um diese voneinander zu trennen. Der Axialtrennrotor ist von einer aus Drahtgittern gebildeten Abscheidefläche ummantelt, welche zwei Abschnitte mit einer Vielzahl von Öffnungen umfasst. Die in zwei Abschnitte unterteilte Abscheidefläche des Axialtrennrotors weist in ihrem ersten, stromaufwärtigen Abschnitt mehrere, in Umfangsrichtung gestaffelte Lamellen auf, während der zweite Abschnitt in herkömmlicher Weise nur durch Drahtgitter gebildet ist. Die Lamellen des ersten Abschnittes sind jeweils um eine zur Längsachse des Axialtrennrotors parallele Achse schwenkbar. Hierzu sind die Lamellen mechanisch miteinander gekoppelt, um ihre Schwenkstellung durch einen gemeinsamen Linearaktor zu beeinflussen. Um den Anteil an Nichtkornbestandteilen in dem von dem Axialtrennrotor abgegebenen Teilstrom gering zu halten, ist gemäß der EP 1 284 098 A1 vorgesehen, dass der erste Abschnitt der Abscheidefläche im Guteintrittsbereich beginnend in stromaufwärtiger Richtung verschlossen wird, um eine Anreicherung des Korns im äußeren Bereich des in dem Axialtrennrotor umlaufenden Erntegutes zu erreichen. Die Steuerung der Verschiebung des frühesten Abscheidebereiches in stromaufwärtiger Richtung erfolgt in Abhängigkeit von der Abfallmaterialmenge, die über den Nutzmaterialteilstrom abgeschieden wird.

Die aus der EP 1 284 098 A1 bekannte Vorrichtung steigert unter bestimmten Erntebedingungen die Leistungsfähigkeit bei Erntefahrten in der Ebene signifikant, jedoch führt das Auftreten einer Neigung des Mähdreschers quer zur Förderrichtung wie bei einer Hangfahrt dazu, dass die örtliche Konzentration des von dem Axialtrennrotor abgegebenen Teilstromes talseitig infolge einer talseitigen höheren Beladung im Schneidwerk durch die Schwerkraft zunimmt, so dass dessen einseitige Aussonderung zu einer zusätzlichen Belastung einer dem Axialtrennrotor nachgeordneten Reinigungsvorrichtung führt. Die Leistung des Mähdreschers am Seitenhang nimmt demgemäß ab.

Daher ist es die Aufgabe der vorliegenden Erfindung, einen Mähdrescher mit zumindest einer Axialabscheidevorrichtung bereitzustellen, bei dem bei auftretender Seitenneigung des Mähdreschers ein Anheben des Leistungsniveaus auf annähernd das in der Ebene erreichbare Leistungsniveau ermöglicht wird. Weiterhin liegt der Erfindung die Aufgabe zu Grunde, ein Verfahren zum Betreiben eines Mähdreschers bereitzustellen, welches ein Anheben des Leistungsniveaus auf annähernd das in der Ebene erreichbare Leistungsniveau ermöglicht.

Diese Aufgaben werden erfindungsgemäß hinsichtlich der Vorrichtung durch die kennzeichnenden Merkmale des Anspruches 1 gelöst und bezüglich des Verfahrens durch die kennzeichnenden Merkmale des Anspruches 4. Gemäß dem Anspruch 1 wird vorgeschlagen, dass Mittel zur Manipulation eines durch Neigung des Mähdreschers hervorgerufenen örtlichen Konzentrationsgefälles des von der Axialabscheidevorrichtung abgegebenen Teilstromes, der sich aus Korn und Nichtkornbestandteilen zusammensetzt, vorgesehen sind, welche in Abhängigkeit von der Neigung des Mähdreschers Individuell ansteuerbar sind. Hierdurch lässt sich zwischen der Tal- und der Hangseite ein Ausgleich des Konzentrationsgefälles des Tellstromes erzielen, was zu einer Vergleichmäßigung der Belastung der nachgeordne-ten Reinigungsvorrichtung führt respektive zu einer Steigerung des Leistungsniveaus. Vorzugsweise können die Mittel dazu eingerichtet sein, einen aktiven Ausgleich des Konzentrationsgefälles des Teilstromes zwischen Tal- und Hangselte herbeizuführen. Hierbei wird ein talseltiges Abscheiden des Teilstromes zumindest reduziert, während ein hangseitges Abscheiden begünstigt wird. Erfindungsgemäß sind die Mittel als Verschlussklappen ausgeführt, durch welche die Durchlässigkeit von Öffnungen der zumindest abschnittsweise von einer mindestens zwei Abschnitte umfassenden Abscheldefläche umgebenen Axialabscheidevorrichtung individuell variierbar ist. Indem die wirksame Abscheidefläche talseitig durch die Variation der Durchlässigkeit reduziert wird, lässt sich der Abgabepunkt des Teilstromes von der Talseite zu der Hangseite hin verlagern, wodurch eine Vergleichmäßigung bei der Belastung der Reinlgungsvorrichtung erreicht wird.
Hierzu kann die Durchlässigkeit des jewelligen Abschnittes der Abscheidefläche in Umfangs- und Längsrichtung varlierbar sein. Somit kann die Durchlässigkeit der Abscheidefläche in Förderrichtung der Axialflbscheldevorrichtung gesehen talseitig geringer gewählt werden als in einem hangseltigen Abschnitt der Axialabscheidevor-richtung. Dadurch wird der entsprechend der Neigung der Axialabscheidevorrichtung abnehmenden örtlichen Konzentration des Teitstromas auf der Reinigungsvorrichtung Rechnung getragen, die es erforderlich werden lässt, den Abgabepunkt In Abhängigkeit von der Neigung, respektive der talseitigen oder hangseltlgen Position der Axlalabscheidevorrichtung, In hangseitiger Richtung zu verschieben. Die der Talseite zugewandten Verschlussklappen werden angelenkt, um die Durchlässigkeit des jewelligen Abschnittes der Abscheldefläche in Umfangs- und Längsrichtung zu reduzieren oder vollständig zu unterbinden, während die hangseltigen Verschlussklappen in eine teilweise oder vollständig geöffnete Stellung überführt und in dieser gehalten werden.

In einer nicht erfindungsgemäßen Ausführungsform können die Mittel als eine Vielzahl von Leltelementen ausgeführt sein, die unterhalb einer die Axialabscheldevorrichtung umgebenden Abscheidefläche In Umfangsrichtung verteilt angeordnet sind, deren Positionen relativ zu der Abscheidefläche individuell variierbar sind. Hierbei können die Leitele-mente entgegen der Neigungsrichtung des Mähdreschers angestellt werden, um eine talseitige Abscheidung durch eine Verringerung der Durchlässigkeit dieses Abschnittes der Abscheidefläche zumindest zu reduzieren, was zu einer Begünstigung der hangseitigen Abscheidung führt.

In einer weiteren nicht erfindungsgemäßen Ausführungsform können die Mittel als um beidseitig zur Axialabscheidevorrichtung achsparallel zu dieser angeordnete Schwenkachsen verschwenkbare, plattenförmige Klappen ausgeführt sein, die derart verschwenkbar sind, dass sie mit ihrer Vorderkante an die Axialabscheldevorrichtung angrenzen, wo sie zwischen dieser und einer Wandung, an der die Schwenkachse angeordnet ist, eine Kammer bilden. Das Befüllen der sich bildenden Kammer verlagert den Ort des Austritts des Teilstromes in Förderrichtung gesehen hangaufwärts, wodurch eine Vergleichmäßigung der Abgabe der Axialabscheidevorrichtung erreichbar ist.

In einer weiteren nicht erfindungsgemäßen Ausführungsform kann vorgesehen sein, dass die Mittel als zumindest jeweils eine beidseitig der Axialabscheidevorrichtung achsparallel zu dieser angeordnete, rotatorisch angetriebene Wurfwalzeausgeführt ist. Die Wurfwalze weist vorzugsweise einen im Wesentlichen sternförmigen Querschnitt auf und ist im Abgabebereich der Axialabscheidevorrichtung schwenkbar an die Axialabscheidevorrichtung seitliche begrenzende Wandungen gelagert. Vorzugsweise ist jeweils eine Wurfwalze benachbart zu jedem Abscheidekorb angeordnet, und erstreckt sich über dessen Breite. Die Wurfwalzen werden der Förderrichtung der Axialabscheldevorrich-tung entgegengesetzt rotatorisch angetrieben.

Insbesondere kann die Rotationsgeschwindigkeit der mindestens einen Wurfwalze Neigungsabhängig veränderbar sein. Dadurch kann unmittelbar auf die Wurfwelte von der Talseite zur Hangseite hin Einfluss genommen werden.

Vorzugsweise können die Mittel pneumatisch betätigbar sein. Die pneumatische Betätigung der Mittel weist den Vorteil auf, dass diese gegenüber hydraulisch betätigten schneller reagieren, so dass die Durchlässigkeit der jeweiligen Abschnitte der Abschei-defläche schneller an eine sich ändernde örtliche Konzentrationen des von der Axialab-scheidevorrichtung abgegebenen Teilstromes anpassbar ist. Ein weiterer Vorteil besteht darin, dass auf Grund des schnelleren Schließens bei pneumatischer Betäti-gung die Gefahr von Verstopfung vermieden wird.

Gemäß einer weiteren nicht erfindungsgemäßen Ausführungsform kann vorgesehen sein, dass die Mittel als Leitbleche ausgeführt sind, welche auf einem unterhalb der Axialabscheldevorrichtung angeordneten Rücklaufboden um eine zur Axialabscheldevorrichtung achsparallele Achse schwenkbar angeordnet sind. Auch bei dieser Ausführungsform werden die Leitbleche auf dem Rücklaufboden entgegen der Neigungsrichtung betätigt, um einen Konzentrationsausgleich des an den Rücklaufboden abgegebenen Teilstromes zu erreichen, welches anschließend von dem Rücklaufboden an die Reinigungsvorrichtung abgegeben wird.
Insbesondere kann die Position jedes Leitbleches relativ zur Oberfläche des Rücklauf-bodens individuell variierbar sein.

Weiterhin betrifft die Erfindung gemäß dem unabhängigen Anspruch 4 ein Verfahren zum Betreiben eines Mähdreschers mit einer Axialabscheidevorrichtung zum Trennen eines von dem Mähdrescher aufgenommenen Erntegutstromes in mehrere Teilströme, von denen ein erster Teilstrom durch eine mehrere Abschnitte umfassende Abscheidefläche der Axialabscheidevorrichtung einer dieser nachgeordneten Reinigungsvorrichtung zugeführt wird. Das Verfahren Ist dadurch gekennzeichnet, dass der von der Axialabscheidevorrichtung an einen Förderboden abgegebene Teilstrom durch Mittel, die In Abhängigkeit von einer erfassten Neigung des Mähdreschers individuell angesteuert werden, manipuliert wird, so dass ein auf Grund der Neigung des Mähdreschers zwischen einer Hangseite und einer Talseite auftretendes örtliches Konzentrationsgefälle bei der Abgabe des ersten Teilstromes auf Grund der Neigung des Mähdreschers ausgeglichen wird.

Hierzu werden erfindungsgemäß in Abhängigkeit von einer erfassten Querneigung des Mähdreschers die talseitig zugewandten Abschnitte der Abscheidefläche zumindest partiell geschlossen. Des Weiteren kann mit zunehmender Beabstandung vom Eintrittsbereich der Axialabscheidevorrichtung die Durchlässigkeit der Abscheidefläche in radialer Richtung verringert werden.

Vorzugsweise kann zumindest ein die Konzentration an Nutzmaterial in einem der aus der Axialabscheidevorrichtung austretenden Teilströme repräsentierendes Signal von einer Sensorik erfasst werden, welches herangezogen wird, um die Durchlässigkeit der Abschnitte unabhängig voneinander zu variieren. Zur Verbesserung der Genauigkeit der Steuerung wird neben der Erfassung einer Seitenneigung des Mähdreschers durch einen geeigneten Neigungssensor zudem der Verlustanteil des von der Axialabscheidevorrichtung ausgeschiedenen Nutzmateriales erfasst.

Alternativ oder ergänzend kann zumindest ein die Konzentration an Nutzmaterial in einem aus einer der Axialabscheldevorrichtung nachgeordneten Reinigungsvorrichtung austretenden Teilstrom repräsentierendes Signal von einer Sensorik erfasst werden, welches herangezogen wird, um die Durchlässigkeit der Abschnitte unabhängig voneinander zu variieren.

Welterhin kann zumindest ein die Konzentration an Nutzmaterial in einem einer Überkehr zugeführten Teilstrom repräsentierendes Signal von einer Sensorik erfasst werden, welches herangezogen wird, um die Durchlässigkeit der Abschnitte unabhängig voneinander zu variieren.

Die Erfindung wird nachstehend anhand von in den Zeichnungen dargestellten Ausführungsbelspielen näher erläutert.

Es zeigen:
- Fig. 1: eine schematisierte Darstellung einen Mähdreschers in Seitenansicht;
- Fig. 2: eine erste Ausführungsform einer Axialabscheidevorrichtung mit in Umfangsrichtung verteilt angeordneten Verschlussklappen;
- Fig. 3a bis 3e: eine schematische Darstellung möglicher Verschlussklappenpositionen gemäß Fig. 2;
- Fig. 4: ein Flussdiagramm zur Veranschaulichung des Steuerungsverfahrens;
- Fig. 5: eine nicht erfindungsgemäße Ausführungsform einer Axialabscheidevorrichtung mit beidseitig der Axialabscheidevorrichtung angeordneten Wurfwalzen;
- Fig. 6: eine weitere nicht erfindungsgemäße Ausführungsform einer Axialabscheidevorrichtung mit beidseitig der Axialabscheidevorrichtung angeordneten Klappen;
- Fig. 7: eine weitere nicht erfindungsgemäße Ausführungsform einer Axialabscheidevorrichtung mit in Umfangsrichtung angeordneten Leitelemente;
- Fig. 8: einen der Axialabscheidevorrichtung nachgeordneten Rücklaufboden, auf dem nicht erfindungsgemäß Leitbleche angeordnet sind.

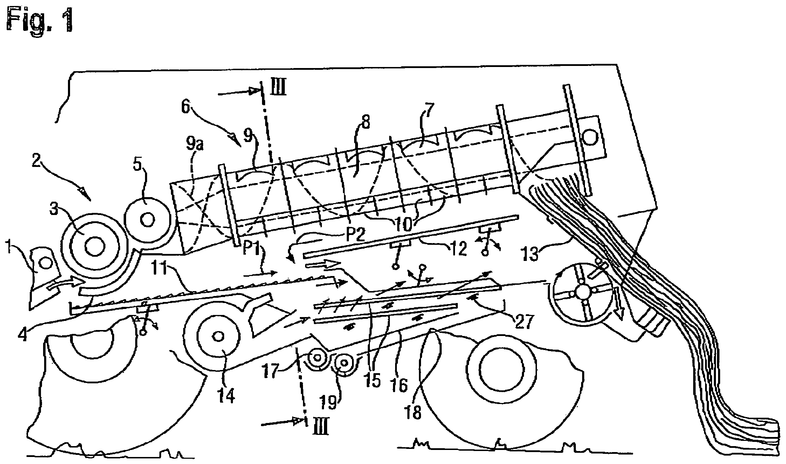

Fig. 1 zeigt einen schematischen Längsschnitt durch den hinteren Bereich eines Mähdreschers. In dem nicht dargestellten vorderen Bereich des Mähdreschers wird zu verarbeitendes Erntegut aufgenommen und von einer nur ansatzweise dargestellten Fördereinrichtung 1 einer tangential wirkenden Drescheinrichtung 2 zugeführt. Die Drescheinrichtung umfasst eine Dreschtrommel 3 mit quer zur Fahrriohtung des Mähdreschers orientierter Achse, die an Ihrem Außenmantel mit Reibelementen bestückt ist und auf einem Teil ihres Umfangs von einem Dreschkorb 4 umgeben ist Ein Teilstrom des von der Drescheinrichtung 2 bearbeiteten Erntegutes gelangt durch Öffnungen im Dreschkorb 4 auf einen Förderboden 11, auf dem dieser, wie durch Pfeil P1 angedeutet, entgegen der Fahrtrichtung des Mähdreschers durch oszillierende Bewegungen gefördert werden.

Ein größerer Teilstrom des Erntegutes wird jedoch zwischen Dreschtrommel 3 und Dreschkorb 4 hindurchgeführt und mit Unterstützung durch eine Leittrommel 5 einer Axialabscheidevorrichtung 6 zugeführt. Die schematisiert dagestellte Axialabscheidevorrichtung 6 ist als zumindest ein zylindrisches, an seinen Enden offenes Gehäuse 7 ausgeführt, in dem über seine gesamte Länge ein Förderorgan 8 drehantreibbar gelagert ist. Durch die Drehung des Förderorgans 8 wird das Erntegut auf einer schraubenllnienförmigen Bahn durch die Axialabscheidevorrichtung 6 gefördert. Von einer Oberseite des Gehäuses 7 in dessen Inneres vorstehende Rippen 9 fördern eine Durchknetung des Erntegutes, wenn der äußere Rand der Wendel 9a des Förderorgans 8 an Ihnen vorbeigeführt wird.

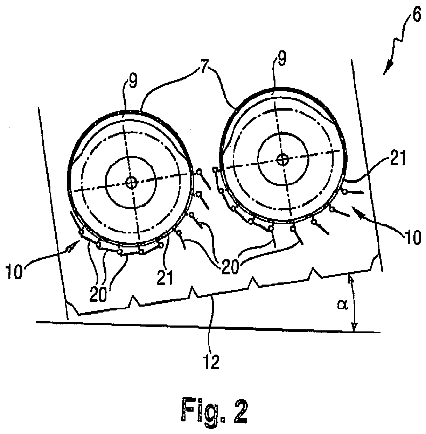

Die Fördergeschwindigkeit wird über die Drehzahl des Förderorgans 8 beeinflusst. Mit steigender Drehzahl des Förderorgans 8 nimmt nicht nur die Fördergeschwindigkeit zu, sondern auch die Fliehkraft und damit die auf das Nutzmaterial einwirkende Kraft, die für dessen Abscheidung ursächlich ist. Gleichzeitig nimmt jedoch die Verweildauer des Erntegutes in der Axialabscheidevorrichtung 6 ab. Der untere Bereich des Gehäuses 7 ist durch Abscheidekörbe 10 gebildet, die Öffnungen 21 für das Hindurchtreten von Erntegut aufweisen, wie in Fig. 2 schematisch dargestellt ist.

Die Bestandteile des von der Axielabscheidevorrichtung abgegebenen Teilstromes. Kömer, Spreu und Feinstroh, die durch die Öffnungen 21 der Abscheidekörbe 10 aus der Axialabscheidevorrichtung 6 herausgeschleudert werden, fallen auf einen darunter befindlichen Förderboden 11 beziehungsweise einen Rücklaufboden 12. Der Förderboden 11 wie auch der Rücklaufboden 12 sind oszillierend angetrieben, so dass auf Ihnen gesammelte Material in Fahrtrichtung des Mähdreschers, angedeutet durch Pfeile P1, P2, befördert wird, wobei das Erntegut auf dem Rücklaufboden 12 an den Förderboden 11 übergeben wird und mit dem bereits in der Drescheinrichtung 2 abgeschiedenen Korn zusammentrifft, um einen Materialstrom zu bilden, der hier als vorgereinigter Strom bezeichnet wird.

Das während des Durchgangs durch die Axialabscheidevorrichtung 6 weitestgehend vom Korn befreite Grobstroh wird am rückseitigen Ende der Axialabscheidevorrichtung 6 ausgeworfen und fällt über eine Rutsche 13 zurück auf den Boden. Die Drescheinrichtung 2 und die Axialabscheidevorrichtung 6 bilden so eine erste Trennstufe oder Abscheidestufe, die einerseits den vorgereinigten Strom und andererseits einen aus dem ausgedroschenen Stroh bestehenden ersten Abfallmaterialstrom liefert.

Eine zweite Trennstufe oder Reinigungsstufe Ist im Wesentlichen aufgebaut aus einem Gebläse 14 und einer Im Windstrom des Gebläses 14 liegenden Gruppe von Siebböden 15, die in einem nicht dargestellten Rahmengestell oszillierend angetrieben sind, und mit dem vorgereinigten Teilstrom beschickt werden. Das im vorgereinigten Tellstrom enthaltene Korn rieselt durch die schwingenden Siebböden 15 hindurch auf einen abschüssigen ersten Leitboden 16. Am unteren Ende des Leitbodens 16 ist eine Förderschnecke 17 angeordnet, die das Korn zu einem Elevator (nicht dargestellt) und über diesen In einen Korntank (nicht dargestellt) fördert.

Leichte Bestandteile des vorgereinigten Stroms werden während des Siebens vom Wind des Gebläses 14 mitgenommen und als ein zweiter Abfallstrom auf den Boden ausgeschieden. Bestandteile des vorgereinigten Stroms, die die Siebböden 15 auf ihrer gesamten Länge überquert haben, ohne durchgesiebt oder vom Gebläsewind mitgenommen zu werden, fallen schließlich auf einen zweiten abschüssigen Leitboden 18 und werden von einer an dessen unteren Ende angeordneten Förderschnecke 19 zurück zur Drescheinrichtung 2 oder zur Abscheideeinrichtung 6 gefördert, um diese erneut zu durchlaufen.

Bei einer Seitenneigung des Mähdreschers, wie sie bei einer Hanglage auftritt, erfolgt die Abgabe des Erntegutes schwerkraftbedingt ungleichmäßig über die Breite des Förderbodens 11, des Rücklaufbodens 12 respektive der Siebböden 15 verteilt. Verstärkt wird die ungleichmäßige Verteilung dadurch, dass der Förderboden 11, der Rücklaufboden 12 wie auch die Siebböden 15 oszillierend angetrieben sind, so dass jeder Hub dazu führt, dass sich das auf den Böden 11, 12, 15 befindliche Erntegut quer zu der Förderichtung weiter in Richtung der Talseite bewegt, wo es zu einer unerwünschten örtlichen Konzentration des Erntegutes kommt.

Um diesen Effekt zu kompensieren, wird vorgeschlagen, dass Mittel zur Manipulation eines durch eine insbesondere Seitenneigung des Mähdreschers hervorgerufenen örtlichen Konzentrationsgefälles des von der Axialabscheidevorrichtung 6 an die Reinigungsvorrichtung abgegebenen ersten Erntegutstromes vorgesehen sind, welche in Abhängigkeit von der Neigung des Mähdreschers individuell ansteuerbar sind. Hierzu sind die Mittel erfindungsgemäß als Verschlussklappen 20 ausgeführt, durch welche die Durchlässigkeit der Öffnungen 21 der zumindest abschnittsweise von einer mindestens zwei Abscheidekörbe 10 umfassenden Abscheidefläche umgebenen Axialabscheidevorrichtung 6 individuell variierbar ist.

Die Darstellung In Fig. 2 zeigt eine schematische Querschnittansicht der Axlalabscheidevorrichtung 6 des Mähdreschers in einer um einen Winkel α zur Horizontalen geneigten Position. Zur Erzielung des bereits weiter oben beschriebenen Effektes werden die Positionen der Verschlussklappen 20 individuell angesteuert, wodurch eine hangseltlge Zunahme der Erntegutstromabgabe erreicht wird.

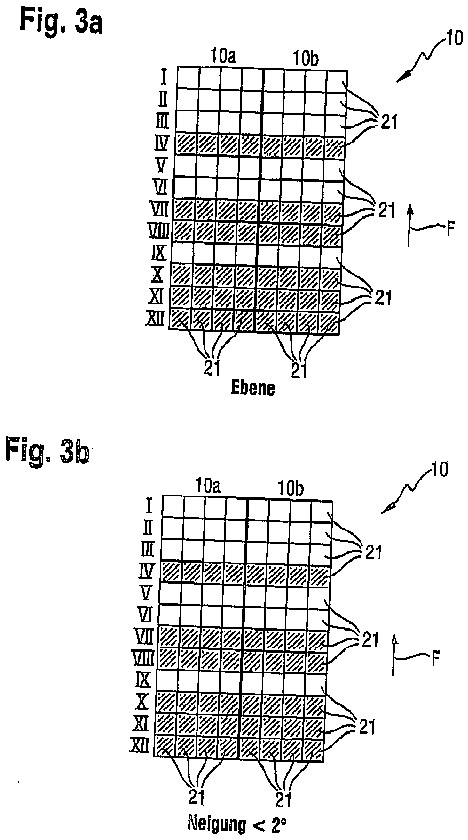

In den Fig. 3a bis 3e Ist In schematischer Darstellung eine Ansicht auf einen abgewickelten Abscheidekorb 10 gemäß Fig. 2 von oben dargestellt, anhand derer die Individuelle Ansteuerung der Verschlussklappen 20 veranschaulicht wird. Die Förderrichtung des Erntegutes im Inneren der Axialabscheidevorrichtung 6 wird durch einen Pfeil F angedeutet. Mit zunehmendem Abstand zum Eingangsbereich der Axialabscheidevorrichtung 6 wird die Anzahl der Öffnungen 21 des jeweiligen Abscheidekorbes 10, durch die das Erntegut austreten kann, verändert, wobei diese Variation nicht nur in Längsrichtung der Axialabscheidevorrichtung 6 variiert wird, sondern auch in radialer Richtung eines jeden Abscheidekorbes 10. Jeder Abscheidkorb 10 weist mehrere Korbreihen I, bis XII auf, deren Durchlässigkeit der Öffnungen 21, die jeweils durch ein Quadrat repräsentiert werden, variierbar ist. Im vorliegenden Ausführungsbeispiel sind zwölf Korbreihen I bis XII mit jeweils acht Öffnungen 21 dargestellt, wobei deren jeweilige Anzahl willkürlich gewählt wurde.

Die Darstellung in Fig. 3a stellt die Einstellung der Verschlussklappen 20 am Abscheidkorb 10 bei der Erntefahrt des Mähdreschers in der Ebene. Jede Korbreihe I bis XII ist in einen talseitigen Bereich 10A und einen hangseitigen Bereich 10B aufgeteilt, die ihrerseits individuell ansteuerbar sind. So sind die Öffnungen 21 der Korbreihen IV, VII und VIII, X, XI und XII sowohl auf dem talseitigen Bereich 10A als auch auf dem hangseitigen Bereich 10B geschlossen, was durch die jeweilige Schraffur angedeutet ist. Die Verschlussklappen 20 der übrigen Korbreichen sind in geöffneter Position dargestellt, was durch das Fehlen der Schraffur angedeutet Ist. Diese Einstellungen gehen auf den Bedlener des Mähdreschers zurück, wie weiter unten erläutert wird.

In Flg. 3b Ist die Einstellung der Verschlussklappen 20 am Abscheidkorb 10 bei der Erntefahrt des Mähdreschers mit einer Hangneigung unterhalb von 2° dargestellt. Die Einstellung unterscheidet sich im vorliegenden Fall nicht von der in der Ebene. Hiervon kann in dem Fall abgewichen werden, wenn die Auslastung der Reinigungsvorrichtung bereits bei der Emtefahrt in der Ebene hoch ist. Es würden dann zuerst Im talseitigen Bereich 10A weitere Korbreihen geschlossen.

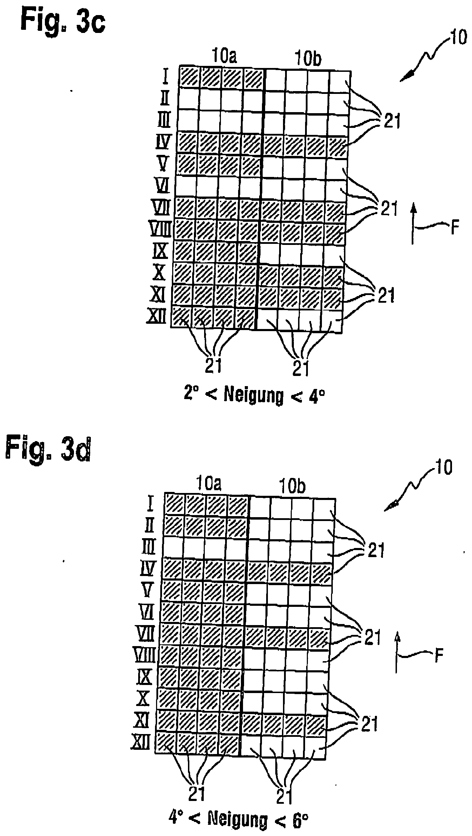

Fig. 3c zeigt die Einstellung der Verschlussklappen 20 am Abscheidkorb 10 bei der Erntefahrt des Mähdreschers mit einer Hangneigung zwischen 2° und unterhalb von 4°. Bei dieser Einstellung sind im talseitigen Bereich 10A die Korbreihen I, IV, V und VII bis XII geschlossen. Hingegen sind auf dem hangseitigen Bereich 10B nur die Korbreihen IV, VII, VIII sowie X und XI geschlossen.

Die Darstellung In Fig. 3d zeigt eine Einstellung der Verschlussklappen 20 am Abscheidkorb 10 bei der Erntefahrt des Mähdreschers mit einer Hangneigung zwischen 4° und unterhalb von 6°. Mit zunehmender Hangnelgung werden in dem talseitigen Bereich 10A weitere Verschlussklappen 20 geschlossen, so dass in dem dargestellten Beispiel lediglich die Korbreihe III geöffnet ist. Auf dem hangseitigen Bereich werden im Gegensatz dazu weiter Korbreihen geöffnet, so dass nur noch die Korbreihen IV, VII und X geschlossen sind. Hierdurch wird eine Umvertellung des Teilstromes erreicht, wobei die Reinigungsvorrichtung hangseitig mit einer größeren Menge an Spreu belastet wird, Die dadurch auftretende zusätzliche Belastung der Reinigungsvorrichtung fällt In einem direkten Vergleich der Belastung der Reinigungsvorrichtung ohne eine Steuerung der Verschlussklappen 20 deutlich geringer aus.

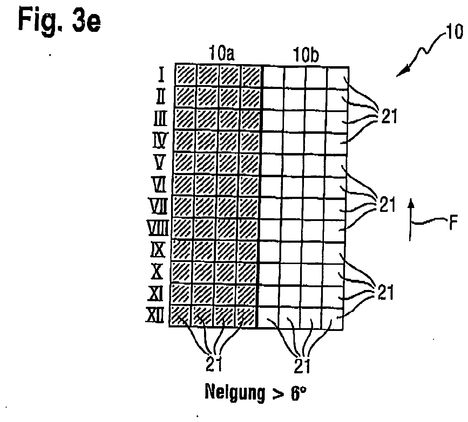

Fig. 3e Ist die Einstellung der Verschlussklappen 20 am Abscheidkorb 10 bei der Erntefahrt des Mähdreschers mit einer Hangnelgung oberhalb von 6° dargestellt. In dem talseitigen Bereich 10A sind sämtliche Korbreihen I bis XII geschlossen, während in dem hangseitigen Bereich 10B alle Korbreihen I bis XII geöffnet sind, um eine deutliche Entlastung der Reinigungsvorrichtung auf ihrer Talseite zu erreichen.

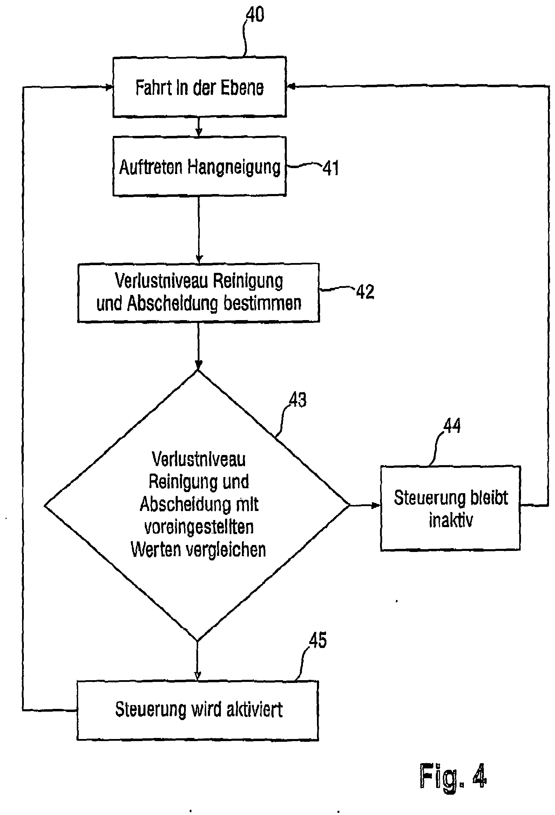

Die Darstellung in Fig. 4 zeigt ein Flussdiagramm, anhand dessen das Steuerungsverfahren erläutert werden soll, welches dem Verfahren zum Betreiben des Mähdreschers 1 zu Grunde liegt. Mit dem Bezugszeichen 40 ist eine Ausgangssituation der Einstellungen des Mähdreschers bei der Erntefahrt In der Ebene bezeichnet. Seitens des Bedleners des Mähdreschers werden für die Erntefahrt Grundeinstellungen vorgenommen, die unter anderem das Abscheidungsverhalten der Abscheidevorrichtung 6 beeinflussen. Hierbei legt der Bediener für Ihn akzeptable Werte für das jeweilige Niveau der Abscheidungsveriuste sowie der Reinigungsverluste fest. Durch eine geeignete Sensorik am Mähdrescher wird in einem Schritt 41 das Auftreten einer Hangneigung während des Erntevorganges sensiert, deren Größenordnung erfasst und abgespeichert wird. Im Anschluss an diesen Schritt 41 werden In einem nachfolgenden Schritt 42 die aktuellen Verlustniveaus des Absoheidungs- sowie der Reinigungsprozesses bestimmt, die auf einer sensorische Erfassung und Auswertung hierfür charakteristischer Parameter zurückgeht.
In Abhängigkeit von den in Schritt 42 bestimmten Verlustniveaus für die Prozesse Abscheidung und Reinigung wird In Schritt 43 entschieden, ob die Steuerung aktiviert wird oder inaktiv bleibt, weil das Verlustniveau des Abscheidungsprozesses leistungsbegrenzend für den Ernteprozess ist. In dem letzteren Fall bliebe die Steuerung gemäß Schritt 44 inaktiv, so dass die Einstellungen gemäß der Fahrt in der Ebene beibehalten werden.
Wird In Schritt 43 hingegen festgestellt, dass das Verlustniveau des Abscheidungsprozesses sich unterhalb der vom Bediener festgelegten Verlustgrenze bewegt, wird die Steuerung aktiviert in Schritt 45. Hierbei wird weiterhin differenziert, ob sich das Verlustniveau des Reinigungsprozesses bei der Erntefahrt in der Ebene bereits an dem von dem Bediener festgelegten Verlustniveau des Reinigungsprozesses bewegt oder darunter liegt Weiterhin ist es möglich, dass nur ein Teil der Steuerung aktiv geschaltet wird. Dieser Fall tritt insbesondere dann auf, wenn das Verlustniveau des Abscheideprozesses bereits den Grenzwert erreicht hat oder nahe am Grenzwert ist und das Verlustniveau des Reinigungsprozesses seinen Grenzwert bereits überschritten hat. In diesem Fall wird nur ein Teil der talseitigen Verschlussklappen 20 geschlossen, beziehungsweise der bergseitigen Verschlussklappen 20 geöffnet.

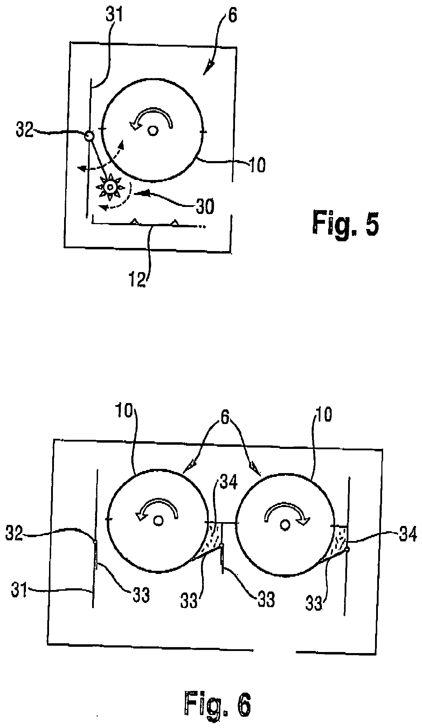

In Fig. 5 ist eine nicht erfindungsgemäße Ausführungsform der Abscheidevorrichtung 6 dargestellt Die Darstellung in Fig. 5 zeigt die Axialabscheidevorrichtung 6 mit mindestens einer zu dieser achsparallel angeordneten Wurfwalze 30. Die mindestens eine Wurfwalze 30 ist um eine Schwenkachse 32 schwenkbar Im unteren Bereich der Axialabscheidevorrichtung 6 angeordnet Die Schwenkachse 32 ist an einer zu der Axialabscheidevorrichtung 6 parallelen Wandung 31 angeordnet. Bei einer einrotorigen Axialabscheidevorrichtung 6 sind beidseitig der Axialabscheidevorrichtung 6 Wurfwalzen 30 angeordnet, um In Abhängigkeit von der Neigung des Mähdreschers die Verteilung des abgegebenen Teilstromes zu beeinflussen. Dies wird durch eine Variation der Drehzahl sowie des Anstellwinkels gegenüber der Axialabscheidevorrichtung 6 der jeweiligen Wurfwalze 30 erreicht. Bei einer nicht dargestellten zweirotorigen Axialabscheidevorrichtung kann zwischen den beiden Abscheiderotoren zusätzlich wenigstens eine weitere Wurfwalze 30 angeordnet sein, um die Abgabe des jeweiligen Tellstromes zu beeinflussen. Die mindestens eine Wurfwalze 30 kann sich zumindest teilweise über die axiale Ausdehnung der Axialabscheidevorrichtung 6 erstrecken. Denkbar ist auch eine Anordnung mehrerer Wurfwalzen 30 hintereinander, die jeweils auf die Teilstromabgabe einzeiner Segmente der Axialabscheidevorrichtung 6 einwirken.

Die Darstellung In Fig. 6 zeigt eine weitere nicht erfindungsgemäße Ausführungsform einer Axialabscheidevorrichtung 6 mit beidseitig der Axialabscheidevorrichtung 6 angeordneten, verschwenkbaren Klappen 33. Die Klappen 33 sind, wie zuvor bereits beschrieben, über Schwenkachsen 32 an den die Axialabscheidevorrichtung 6 nach außen begrenzenden Wandungen 31 angelenkt. Zwischen der zweirotorigen Axialabscheidevorrichtung 6 sind ebenfalls Klappen 33 schwenkbar angeordnet. In Abhängigkeit von der Neigung werden die Klappen 33 in Richtung des jeweiligen Abscheiderotors verschwenkt, wodurch sich auf der der Talseite zugewandten Seite der Axialabscheidevorrichtung 6 Kammern ausbilden, in denen sich Erntegut temporär anstaut, wodurch die Durchlässigkeit der Abscheidekörbe 10 in der Welse manipuliert wird, dass hangseitig eine höhere örtliche Konzentration des abgegebenen Teilstromes auf der Reinigungsvorrichtung erreichbar ist.

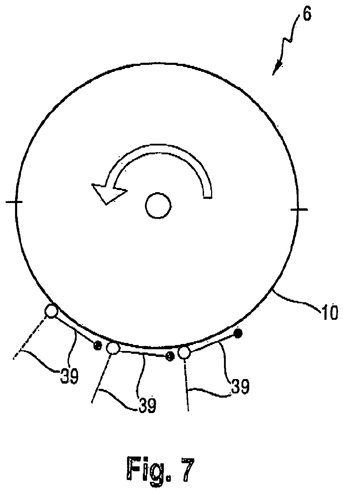

in Fig. 7 ist eine weitere nicht erfindungsgemäße Ausführungsform einer Axialabscheidevorrichtung 6 mit in Umfangsrichtung angeordneten Leitelementen 39 dargestellt. Die Leitelemente 39 sind mit durchgezogenen Linien in einer geschlossenen Position dargestellt, in der sie den Austritt des Teilstromes aus der Abscheidevorrichtung beeinflussen. In einer geöffneten, vom Abschiedkorb 10 abgewandten Position sind die Leitelemente 39 strichlinlert angedeutet.

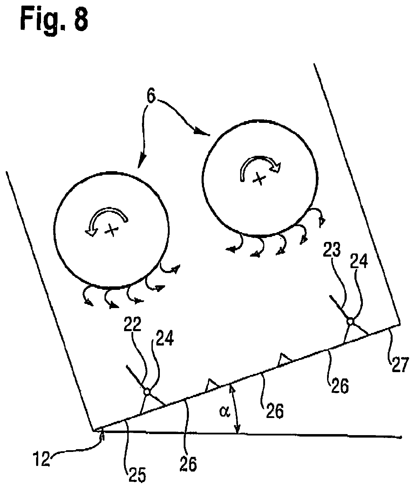

Die nicht erfindungsgemäße Darstellung In Fig. 8 zeigt den der Axialabscheidevorrichtung 6 nachgeordneten Rücklaufboden 12, auf dem zumindest zwei Leitbleche 22, 23 beabstandet zueinander angeordnet sind. Die beiden Leitbleche 22, 23 erstrecken sich achsparallel zur Längsachse der Axialabscheidevorrichtung 6 und sind jeweils um eine zu dieser Längsachse achsparallel verlaufende Schwenkachse 24 schwenkbar auf dem Rücklaufboden 12 angeordnet. Die Anordnung der mindestens zwei Leitbleche 22, 23 auf dem Rücklaufboden 12 ist derart gewählt, dass diese jeweils zu einer der Außenseiten des Rücklaufbodens 12 benachbart angeordnet sind. Die Leitbleche 22, 23 werden in Abhängigkeit von der Neigung vorzugsweise pneumatisch betätigt, um eine Ablenkung des von der Axialabscheidevorrichtung 6 abgegebenen Erntegutes von der Talseite hin zur Hangseite zu erreichen. Durch die Stellung des Leitbleches 22 auf der Talseite wird der äußere, talseitige Abschnitt 25 des Rücklaufbodens 12, auf dem In Folge der Neigung α eine Anhäufung des von der Axialabscheidevorrichtung 6 abgegebenen Erntegutes auftritt, zumindest auf den unmittelbar benachbarten Abschnitt 26 abgelenkt. Hingegen führt die Stellung des hangseitigen Leitbleches 23 dazu, dass das von der Axialabscheidevorrichtung 6 abgegebene Erntegut In stärkerem Maße dem äußeren hangseitigen Abschnitt 27 zugeführt wird. Die Betätigung der mindestens zwei Leitbleche 22, 23 kann auch hydraulisch oder elektrisch erfolgen.

**Bezugszeichenliste**

| | | | |
|---|---|---|---|
| 1 | Fördereinrichtung | 24 | Schwenkachse |
| 2 | Drescheinrichtung | 25 | Talseitiger Abschnitt |
| 3 | Dreschtrommel | 26 | Benachbarter Abschnitt |
| 4 | Dreschkorb | 27 | Hangseitiger Abschnitt |
| 5 | Leittrommel | | |
| 6 | Axialabscheidevorrichtung | 30 | Wurfwalze |
| 7 | Gehäuse | 31 | Wandung |
| 8 | Förderorgan | 32 | Schwenkachse |
| 9 | Rippen | 33 | Klappe |
| 9a | Wendel | 34 | Kammer |
| 10 | Abscheidekörbe | | |
| 11 | Förderboden | 39 | Leitelement |
| 12 | Rücklaufboden | | |
| 13 | Rutsche | 40 | Ausgangssituation Fahrt in der Ebene |
| 14 | Gebläse | 41 | Feststellung Hangneigung |
| 15 | Siebboden | 42 | Verlustniveaubestimmung |
| 16 | Leitboden | 43 | Vergleich |
| 17 | Förderschnecke | 44 | Steuerung inaktiv |
| 18 | Leitboden | 45 | Steuerung aktiv |
| 19 | Förderschnecke | | |
| 20 | Verschlussklappe | α | Neigungswinkel |
| 21 | Öffnung des Abscheidekorbes | | |
| 22 | Leitblech | | |
| 23 | Leitblech | | |

## Patentansprüche

1. Mähdrescher mit einer Axialabscheidevorrichtung (6) zum Trennen eines von dem Mähdrescher aufgenommenen Erntegutstromes in mehrere Teilströme, von denen ein aus Korn und Nichtkornbestandteilen bestehender Teilstrom durch eine Abscheidefläche (10) der Axialabscheidevorrichtung (6) einer dieser nachgeordneten Reinigungsvorrichtung zuführbar ist, wobei Mittel zur Manipulation eines durch Neigung des Mähdreschers hervorgerufenen örtlichen Konzentrationsgefälles des von der Axialabscheidevorrichtung (6) an einen Förderboden (11, 12) abgegebenen Teilstromes vorgesehen sind, **dadurch gekennzeichnet, dass** die Mittel in Abhängigkeit von der Neigung des Mähdreschers individuell ansteuerbar sind, und dass die Mittel als Verschlussklappen (20) ausgeführt sind, durch welche die Durchlässigkeit von Öffnungen (21) der zumindest abschnittsweise von der mindestens zwei Abschnitte umfassenden Abscheidefläche (10) umgebenen Axialabscheidevorrichtung (6) individuell variierbar ist.

2. Mähdrescher nach Anspruch 1, **dadurch gekennzeichnet, dass** die Mittel dazu eingerichtet sind, einen aktiven Ausgleich des Konzentrationsgefälles des Teilstromes zwischen Tal- und Hangseite herbeizuführen.

3. Mähdrescher nach einem der vorherigen Ansprüche, **dadurch gekennzeichnet, dass** die Durchlässigkeit des jeweiligen Abschnittes der Abscheidefläche (10) in Umfangs- und Längsrichtung variierbar ist.

4. Verfahren zum Betreiben eines Mähdreschers mit einer Axialabscheidevorrichtung (6) zum Trennen eines von dem Mähdrescher aufgenommenen Erntegutstromes in mehrere Teilströme, von denen ein erster Teilstrom durch eine mehrere Abschnitte umfassende Abscheidefläche (10) der Axialabscheidevorrichtung (6) einer dieser nachgeordneten Reinigungsvorrichtung zugeführt wird, wobei der von der Axialabscheidevorrichtung (6) an einen Förderboden (11, 12) abgegebene erste Teilstrom durch Mittel manipuliert wird, so dass ein zwischen einer Hangseite und einer Talseite auftretendes örtliches Konzentrationsgefälle bei der Abgabe des ersten Teilstromes auf Grund der Neigung des Mähdreschers ausgeglichen wird, **dadurch gekennzeichnet, dass** die Mittel in Abhängigkeit von einer erfassten Neigung des Mähdreschers individuell angesteuert werden, wobei in Abhängigkeit von einer erfassten Querneigung die talseitig zugewandten Abschnitte der Abscheidefläche (10) zumindest partiell geschlossen werden.

5. Verfahren nach Anspruch 4, **dadurch gekennzeichnet, dass** mit zunehmendem Abstand zum Eintrittsbereich der Axialabscheidevorrichtung (6) die Durchlässigkeit der Abscheidefläche (10) in radialer Richtung verringert wird.

6. Verfahren nach einem der Ansprüche 4 bis 5, **dadurch gekennzeichnet, dass** zumindest ein die Konzentration an Nutzmaterial in einem der aus der Axialabscheidevorrichtung (6) austretenden Teilströme repräsentierendes Signal von einer Sensorik erfasst wird, welches herangezogen wird, um die Durchlässigkeit der Abschnitte unabhängig voneinander zu variieren.

7. Verfahren nach einem der Ansprüche 4 bis 6, **dadurch gekennzeichnet, dass** zumindest ein die Konzentration an Nutzmaterial in einem aus einer der Axialabscheidevorrichtung (6) nachgeordneten Reinigungsvorrichtung austretenden Teilstrom repräsentierendes Signal von einer Sensorik erfasst wird, welches herangezogen wird, um die Durchlässigkeit der Abschnitte unabhängig voneinander zu variieren.

8. Verfahren nach einem der Ansprüche 4 bis 7, **dadurch gekennzeichnet, dass** zumindest ein die Konzentration an Nutzmaterial in einem einer Überkehr zugeführten Teilstrom repräsentierendes Signal von einer Sensorik erfasst wird, welches herangezogen wird, um die Durchlässigkeit der Abschnitte unabhängig voneinander zu variieren.

## Claims

1. A combine harvester comprising an axial separating device (6) for separating a crop material flow picked up by the combine harvester into a plurality of partial flows, of which a partial flow comprising grain and non-grain components can be fed by a separating surface (10) of the axial separating device (6) to a cleaning device arranged downstream thereof, wherein there are provided means for manipulation of a local drop in concentration caused by inclination of the combine harvester of the partial flow discharged by the axial separating device (6) to a conveyor plate (11, 12), **characterised in that** the means are individually actuable in dependence on the inclination of the combine harvester and that the means are in the form of closure flaps (20) by which the transmissibility of openings (21) of the axial separating device (6) at least portion-wise surrounded by the separating surface (10) which includes at least two portions is individually variable.

2. A combine harvester according to claim 1 **characterised in that** the means are adapted to perform active compensation for the drop in concentration of the partial flow between the downhill and the uphill sides.

3. A combine harvester according to one of the preceding claims **characterised in that** the transmissibility of the respective portion of the separating surface (10) is variable in the peripheral and longitudinal direction.

4. A method of operating a combine harvester having an axial separating device (6) for separating a crop material flow picked up by the combine harvester into a plurality of partial flows, of which a first partial flow is fed by a separating surface (10) including a plurality of portions of the axial separating device (6) to a cleaning device arranged downstream thereof, wherein the first partial flow discharged by the axial separating device (6) to a conveyor plate (12) is manipulated by means so that a local drop in concentration occurring between an uphill side and a downhill side is compensated upon discharge of the first partial flow on the basis of the inclination of the combine harvester, **characterised in that** the means are individually actuated in dependence on a detected inclination of the combine harvester, wherein the portions of the separating surface (10) that are towards the downhill side are at least partially closed in dependence on a detected transverse inclination.

5. A method according to claim 4 **characterised in that** the transmissibility of the separating surface (10) is reduced in the radial direction with an increasing space relative to the entry region of the axial separating device (6).

6. A method according to one of claims 4 and 5 **characterised in that** at least one signal representing the concentration of useful material in one of the partial flows issuing from the axial separating device (6) is detected by a sensor means which is used to vary the transmissibility of the portions independently of each other.

7. A method according to one of claims 4 to 6 **characterised in that** at least one signal representing the concentration of useful material in one of the partial flows issuing from a cleaning device arranged downstream of the axial separating device (6) is detected by a sensor means which is used to vary the transmissibility of the portions independently of each other.

8. A method according to one of claims 4 to 7 **characterised in that** at least one signal representing the concentration of useful material in a partial flow fed to a returns is detected by a sensor means used to vary the transmissibility of the portions independently of each other.

## Revendications

1. Moissonneuse-batteuse comprenant un dispositif de séparation axial (6) pour séparer un flux de récolte ramassé par la moissonneuse-batteuse en plusieurs flux partiels dont un flux partiel constitué de grain et de composants non-grains peut être amené, par l'intermédiaire d'une surface de séparation (10) du dispositif de séparation axial (6), à un dispositif de nettoyage disposé à la suite de celui-ci, des moyens étant prévus pour modifier un écart de concentration local, dû à l'inclinaison de la moissonneuse-batteuse, du flux partiel délivré par le dispositif de séparation axial (6) à une table de préparation (11, 12), **caractérisée en ce que** les moyens sont commandables individuellement en fonction de l'inclinaison de la moissonneuse-batteuse, et **en ce que** les moyens sont conformés en volets de fermeture (20) qui permettent de faire varier individuellement l'aptitude au passage d'ouvertures (21) du dispositif de séparation axial (6) entouré au moins par endroits par la surface de séparation (10) comprenant au moins deux portions.

2. Moissonneuse-batteuse selon la revendication 1, **caractérisée en ce que** les moyens sont agencés pour provoquer une compensation active de l'écart de concentration du flux partiel entre côté aval et côté amont.

3. Moissonneuse-batteuse selon une des revendications précédentes, **caractérisée en ce que** l'aptitude au passage de chaque portion de la surface de séparation (10) est variable dans les directions circonférentielle et longitudinale.

4. Procédé de fonctionnement d'une moissonneuse-batteuse comprenant un dispositif de séparation axial (6) pour séparer un flux de récolte ramassé par la moissonneuse-batteuse en plusieurs flux partiels dont un premier flux partiel est amené, par l'intermédiaire d'une surface de séparation (10), comprenant plusieurs portions, du dispositif de séparation axial (6) à un dispositif de nettoyage disposé à la suite de celui-ci, le premier flux partiel délivré par le dispositif de séparation axial (6) à une table de préparation (11, 12) étant modifié par des moyens, de façon qu'un écart de concentration local survenant entre un côté amont et un côté aval lors de la délivrance du premier flux partiel en raison de l'inclinaison de la moissonneuse-batteuse soit compensé, **caractérisé en ce que** les moyens sont commandés individuellement en fonction d'une inclinaison détectée de la moissonneuse-batteuse, les portions de la surface de séparation (10) orientée vers l'aval étant fermées au moins partiellement en fonction d'une inclinaison transversale détectée.

5. Procédé selon la revendication 4, **caractérisé en ce que** l'aptitude au passage de la surface de séparation (10) dans la direction radiale diminue à mesure que la distance avec la zone d'entrée du dispositif de séparation axial (6) augmente.

6. Procédé selon une des revendications 4 à 5, **caractérisé en ce qu'**au moins un signal représentant la concentration en matériau utile dans un des flux partiels sortant du dispositif de séparation axial (6) est détecté par des moyens de capteur et est utilisé pour faire varier l'aptitude au passage des portions indépendamment les unes des autres.

7. Procédé selon une des revendications 4 à 6, **caractérisé en ce qu'**au moins un signal représentant la concentration en matériau utile dans un flux partiel sortant d'un dispositif de nettoyage disposé à la suite du dispositif de séparation axial (6) est détecté par des moyens de capteur et est utilisé pour faire varier l'aptitude au passage des portions indépendamment les unes des autres.

8. Procédé selon une des revendications 4 à 7, **caractérisé en ce qu'**au moins un signal représentant la concentration en matériau utile dans un flux partiel amené au retour à ôtons est détecté par des moyens de capteur et est utilisé pour faire varier l'aptitude au passage des portions indépendamment les unes des autres.
